# EUROPÄISCHE PATENTSCHRIFT

(11) **EP 2 497 589 B1**
(45) Veröffentlichungstag und Bekanntmachung des Hinweises auf die Patenterteilung: **20.11.2013**
(21) Anmeldenummer: 12158046.8
(22) Anmeldetag: 05.03.2012
(51) Int. Cl.: B23B 5/16

(54) **Kalibrier- und Anfaswerkzeug für rohrförmige Werkstücke**
Calibrating and chamfering tool for tubular workpieces
Outil de calibrage et de chanfreinage pour pièces usinées tubulaires

(30) Priorität: 11.03.2011 DE 102011013716
(43) Veröffentlichungstag der Anmeldung: 12.09.2012
(73) Patentinhaber: ProPress GmbH, 42699 Solingen (DE)
(72) Erfinder: Felsberg, Martin, 42699 Solingen (DE); Felsberg, Stefan, 42697 Solingen (DE)
(74) Vertreter: Vomberg, Friedhelm

(56) Entgegenhaltungen:
- EP-A1- 0 922 518
- DE-A1- 19 800 029
- DE-A1-102004 024 025
- DE-U1- 20 021 964
- DE-U1- 20 319 565
- DE-U1-202004 008 378

## Beschreibung

Die vorliegende Erfindung betrifft ein Kalibrier- und Anfaswerkzeug (im folgenden Werkzeug genannt) für rohrförmige Werkstücke mit einem Zentrierkörper, mindestens einem hierzu versetzt angeordneten Flügel, auf dem eine Schneide ausgebildet ist, und einem Flächenabschnitt für eine radial abstehende Grundplatte.

Ein derartiges Werkzeug ist aus DE 20 2004 008 378 bekannt. Das beschriebene Werkzeug besitzt einen Schneidkörper, der im Wesentlichen einen Grundkörper aufweist, auf dem Schneiden angeformt sind. Ferner ist das Werkzeug von einem Außenkalibrierkörper umfasst, der als Zentrierhilfe für das einzuführende rohrförmige Werkstück dient. Um eine ausreichende Spanabfuhr beim Anfasen gewährleisten zu können, ist vorgesehen, dass der Schneidkörper freiliegend in Bezug auf die AußenKalibrierkörper ausgebildet ist. Die beim Schneiden bzw. Anfasen anfallenden Späne sollen unmittelbar der Schwerkraft folgend abfallen. Nachteilig an einem derart ausgestalteten Werkzeug ist, dass die freiliegenden Schneidkörper ein erhebliches Gefahrenpotential bilden, denn insbesondere bei Werkzeugen, die motorisch ausgebildet sind, können Winkelgeschwindigkeiten von bis zu 500 Umdrehungen pro Minute erreicht werden, so dass ein versehentlicher Kontakt mit den Schneidkörpern unbedingt zu vermeiden ist. Ferner ist zwischen der Stirnfläche des rohrförmigen Werkstücks und dem Grundkörper nur wenig Platz, so dass zumindest die Späne nicht hinreichend abgeführt werden können, die beim Anfasen der Rohrinnenseite entstehen. Hierdurch ist die Gefahr des Verstopfens im Rohrinneren relativ hoch.

Ein anderes Anfaswerkzeug ist aus DE 198 00 029 bekannt, bei dem die Anfasschneiden an einem Fräskörper angeformt sind. Auf Höhe der Schneidkanten ist ein Schutzring angeordnet, der ein unbeabsichtigtes Berühren der Schneide vermeidet. Unterhalb der Schneidkanten sind Ausnehmungen in den Fräskörper eingeschnitten, die für eine Spanabfuhr sorgen sollen. Allerdings ist ein solches Werkzeug relativ materialintensiv und schwierig herzustellen, denn insbesondere das Einschleifen der Ausnehmungen ist mit einem hohen Fertigungsaufwand verbunden.

Weitere Anfaswerkzeuge sind aus EP 0 922 518 A1, DE 200 21 964 U1, DE 10 2004 024 025 A1 und DE 203 19 565 U1 bekannt.

Es ist Aufgabe der vorliegenden Erfindung die genannten Nachteile zu beheben und ein Kalibrier- und Anfaswerkzeug vorzuschlagen, das einfach herzustellen ist und bei dem eine optimale Spanabfuhr gewährleistet ist, auch wenn die Schneiden zur Vermeidung von Verletzungen von einer radial angeordneten Schutzhülse umfasst sind.

Diese Aufgabe wird durch das Kalibrier- und Anfaswerkzeug nach Anspruch 1 gelöst. Erfindungsgemäß ist der Flügel zumindest bereichsweise von den Flächenabschnitten für die Grundplatte in axialer Richtung beabstandet, so dass ein Freiraum für die Abfuhr anfallender Späne vorliegt. Durch die Anordnung eines Freiraums wird nicht nur die Möglichkeit einer guten Spanabfuhr ermöglicht, sondern zudem kann auf die aufwendige Ausformung von Ausnehmungen zur Spanabfuhr verzichtet werden. Ferner ist es möglich die Schneidkante in radialer Richtung durch eine Schutzhülse vor einem direkten Eingriff zu schützen.

Vorteilhafte Ausgestaltungen der Erfindung werden im Folgenden sowie in den Unteransprüchen angegeben.

Nach einer ersten bevorzugten Ausführungsform ist vorgesehen, dass das Werkzeug als Fräskörper ausgebildet ist, der frontseitig den Zentrierkörper aufweist und rückwärtig einen Antriebszapfen besitzt, der mit einem manuellen oder motorischen Antrieb verbindbar ist. Ein solcher Fräskörper ist vergleichsweise einfache und maßgenau herzustellen. Der frontseitige Zentrierkörper dient zur Zentrierung und exakten Positionierung des rohrförmigen Werkstückes, das zum Anfasen über die Zentrierkörper bis zu dem mit Schneiden versehenen Flügel geschoben wird. Durch Drehen des Werkzeuges in Bezug zu dem relativ zu dem Werkzeug ruhenden rohrförmigen Werkstück formen die Schneiden die gewünschten Fasen an der Innen- und Außenkante sowie eine ebene Frontfläche des rohrförmigen Werkstückes. Zum Drehen des Werkzeuges wird es über einen Antriebszapfen mit einem motorischen oder manuellen Antrieb verbunden. Als manueller Antrieb bietet sich ein einfacher Knauf an, während für einen motorischen Antrieb eine Bohrmaschine eingesetzt werden kann.

Nach einer weiteren bevorzugten Ausführungsform der Erfindung ist die Grundplatte einstückig mit dem Werkzeug verbunden. Alternativ hierzu ist die Grundplatte ein Teil einer Schutzhülse, die zudem einen zylinderförmigen Abschnitt besitzt, der im zusammengebauten Zustand koaxial zu dem Werkzeug gelagert ist und dieses zumindest teilweise umfasst. Die Grundplatte, die vorzugsweise radial zumindest soweit wie die Flügel von der Drehachse des Werkzeuges absteht, dient mehreren Zwecken. Einerseits dient sie als Halterung für den zylinderförmigen Teil der Schutzhülse und andererseits verhindert die Grundplatte, dass abfallende Späne in das Futter der angeschlossenen Bohrmaschine oder des manuellen Antriebs fallen.

Um zu verhindern, dass die Schneiden unbeabsichtigt berührt werden, umfasst der zylinderförmige Abschnitt der Schutzhülse zumindest auf Höhe der Flügel das Werkzeug. Allerdings ist der zylinderförmige Abschnitt vorzugsweise entlang des kompletten Werkzeuges ausgebildet und umgreift auch den Zentrierkörper, so dass die Schutzhülse als zusätzliche Zentrierhilfe dient. Hierzu ist die Schutzhülse nach einer bevorzugten Ausgestaltung der Erfindung zumindest um den Betrag der Mantelfläche des rohrförmigen Werkstückes von dem Zentrierkörper beabstandet.

Um die Spanabfuhr der beim Anfasen entstehenden Späne ermöglichen zu können, besitzt die Schutzhülse nach einer vorteilhaften Ausbildung der Erfindung mindestens eine Ausnehmung, wobei die Ausnehmung vorzugsweise an der Manteloberfläche des zylinderförmigen Abschnittes ausgebildet ist. Vorzugsweise ist die Ausnehmung in Drehrichtung beim Anfasen hinter dem Flügel angeordnet, so dass eine schnelle Abfuhr der Späne möglich ist.

Das Werkzeug und die Schutzhülse sind zwei voneinander getrennt herzustellende Bauteile, die anschließend zusammengesetzt werden. Während das Werkzeug als Fräskörper vorzugsweise aus einem Metall besteht, kann die Schutzhülse als Spritzgussteil aus einem Kunststoff hergestellt sein.

Zum Zusammenbauen besitzt die Grundplatte nach einer vorteilhaften Ausgestaltung der vorliegenden Erfindung eine zentrale Bohrung, die so bemessen ist, dass die Schutzhülse über den Antriebszapfen aufsteckbar ist, wo sie mittelbar oder unmittelbar über eine Gewindeverbindung mit dem Werkzeug verbindbar ist. Als Gewindeverbindung bietet sich ein Gewindeabschnitt an, der an dem Antriebszapfen ausgebildet ist, so dass die Schutzhülse mittels einer Mutter fixiert ist.

Um einen gleichmäßigen Schnitt zu ermöglichen, sind am Werkzeug bevorzugt mehrere Flügel - vorzugsweise äquiangular - angeordnet, so dass stets mehrere Schneidkanten in das rohrförmige Werkstück eingreifen. Hierdurch wird die Ausbildung einer (bezüglich einer radial ebenen) schrägen Schnittfläche vermieden. Vorzugsweise sind vier Flügel vorgesehen, die um je 90° zueinander versetzt angeordnet sind.

Nach einer bevorzugten Ausführungsform der Erfindung ist vorgesehen, dass die Schneidkanten der Flügel unterschiedlich ausgebildet sind, wobei für die Ausformung einer Außenfase, einer Innenfase und einer ebenen Stirnseite jeweils mindestens eine Schneidkante vorhanden ist. Vorzugsweise dienen zumindest sich diametral gegenüberliegende Schneidkanten zur Ausformung der gleichen Fase, während alle Schneidkanten einen radial ausgerichteten Schneidkantenabschnitt besitzen, der zur Ausformung der ebenen Stirnfläche des rohrförmigen Werkstückes dient. Durch diese Ausgestaltung kann eine glatte Oberfläche und somit ein Werkstück mit hoher Oberflächengüte hergestellt werden.

Konkrete Ausführungsformen der vorliegenden Erfindung werden im Folgenden anhand der Zeichnungen erläutert. Es zeigen:
- Fig. 1:: eine Seitenansicht eines Kalibrier- und Anfaswerkzeuges (ohne Schutzhülse),
- Fig. 2a, b: jeweils eine Seitenansicht eines Kalibrier- und Anfaswerkzeuges (mit Schutzhülse) und
- Fig. 3: eine Querschnittsdarstellung eines Kalibrier- und Anfaswerkzeuges (mit Schutzhülse).

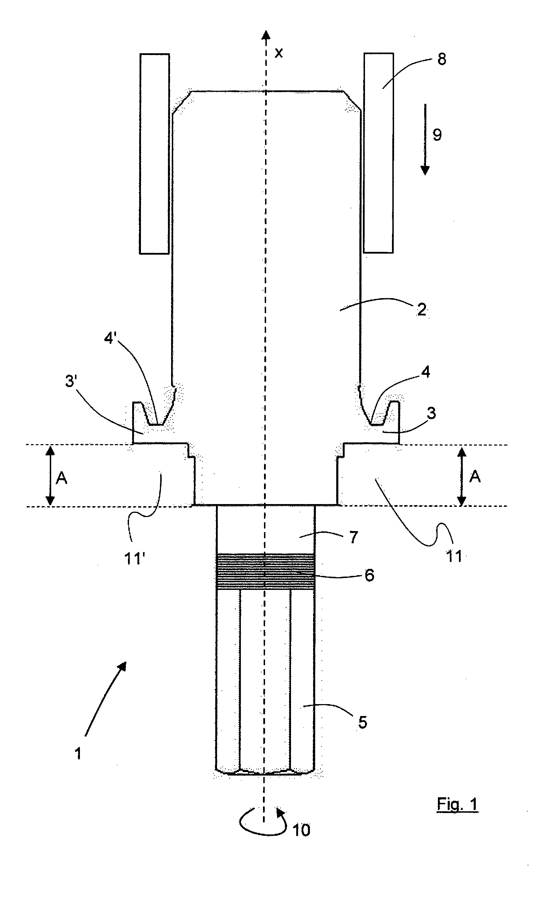

Das Werkzeug 1 besteht im Wesentlichen aus einem frontseitig angeordneten Zentrierkörper 2, von dem in axialer Richtung x beabstandet die Flügel 3, 3' mit den Schneiden 4, 4' beabstandet ist. Zur Aufnahme des Werkzeuges 1 ist endseitig ein Antriebszapfen 5 vorgesehen, in dessen Verlängerung ein Gewindeabschnitt 6 und ein Flächenabschnitt 7 für eine Grundplatte (in Fig. 1 nicht dargestellt) ausgebildet ist. Zum Anfasen eines rohrförmigen Werkstückes 8 wird dieses in Pfeilrichtung 9 über den Zentrierkörper 2 bis zum Eingriff mit der Schneide 4, 4' geschoben. Durch Drehen des Werkzeuges 1 in Pfeilrichtung 10 wird das rohrförmige Werkstück entsprechend der Ausgestaltung der Schneiden 4, 4' angefast.

Um eine optimale Spanabfuhr der beim Anfasen anfallenden Späne zu ermöglichen, ist der Flügel 3, 3' von dem Flächenabschnitt 7 für die Grundplatte beabstandet (Abstand A), so dass ein Freiraum 11, 11' für die Späne entsteht.

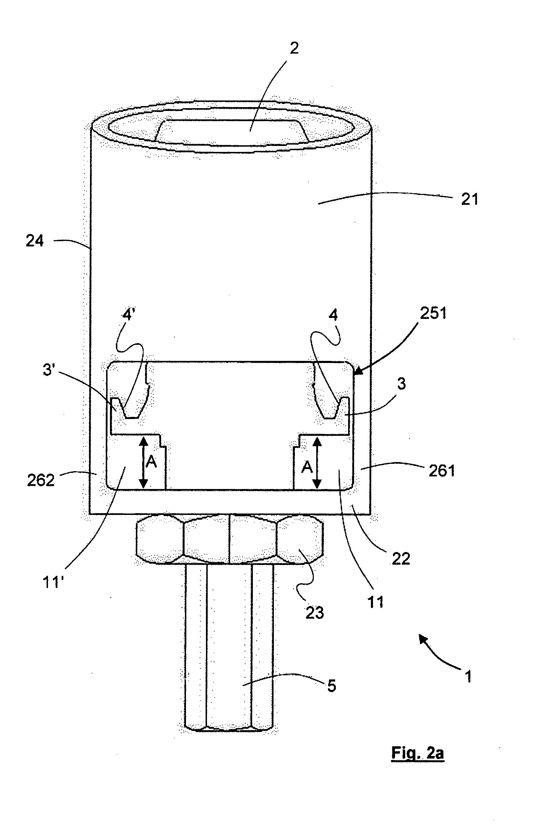

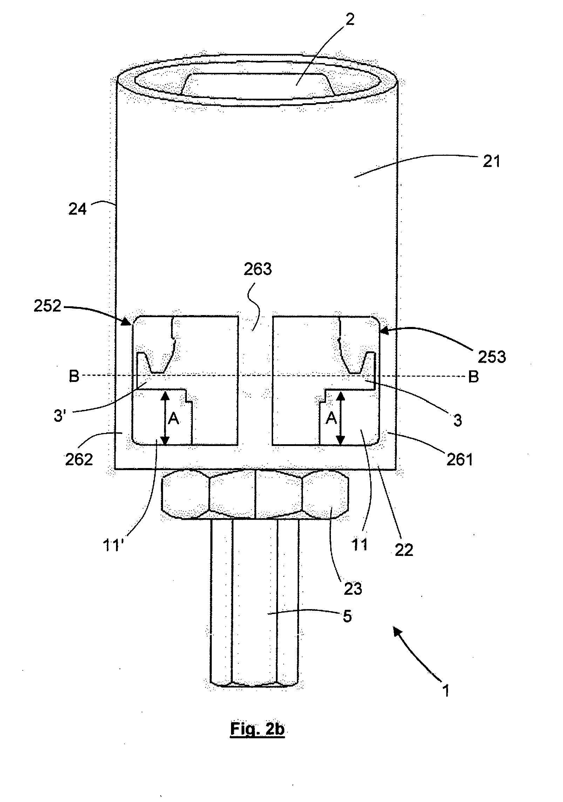

Fig. 2a und b zeigen je eine konkrete Ausführungsform des Werkzeuges 1 mit daran angebrachter Schutzhülse 21. Die Schutzhülse 21 besitzt eine Grundplatte 22 und wird auf den Antriebszapfen 5 aufgesteckt und dort über eine Mutter 23, die mit dem Gewindeabschnitt 6 in Wirkverbindung steht, fixiert. Die Schutzhülse 21 besitzt darüber hinaus einen zylinderförmigen Abschnitt 24, der das Werkzeug 1 umfasst. In Umfangsrichtung hinter den Flügel 3, 3' besitzt die Schutzhülse 21 eine Ausnehmung 251, 252, 253, durch die Spanabfuhr ermöglicht wird. Hierdurch entstehen Stege 261, 262, 263, die den vorderen zylinderförmigen Abschnitt mit der Grundplatte verbinden und die Flügel 3, 3' in radialer Richtung abdecken. Die Spanabfuhr wird dadurch optimiert, dass die Flügel 3, 3' von der Grundplatte 22 beabstandet sind (Abstand A), so dass dort der Freiraum 11, 11' entsteht. Insbesondere die im rohrförmigen Werkstück anfallenden Späne können hierdurch optimal abgeführt werden.

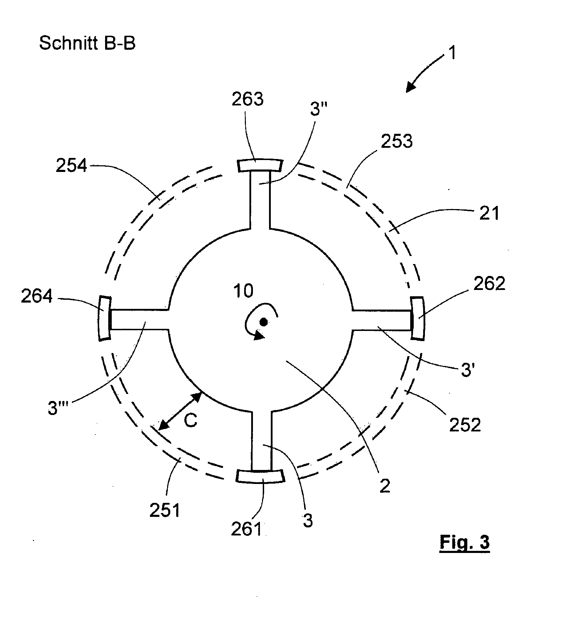

Fig. 3 zeigt eine konkrete Ausgestaltung der Erfindung in einer Querschnittsdarstellung entlang der Linie B-B (siehe Fig. 2b). Von dem mittig angeordneten Zentrierkörper 2 sind vier Flügel 3, 3', 3", 3'" radial abstehend und um jeweils 90° zueinander versetzt angeordnet. Auf diesen Flügeln 3, 3', 3", 3'" sind die (nicht dargestellten) Schneidkanten ausgebildet. Das Werkzeug 1 wird von der Schutzhülse 21 umfasst, die jeweils - in Umfangsrichtung - hinter den Flügeln 3, 3', 3", 3'" eine Ausnehmung 251, 252, 253, 254 aufweist. Auf Höhe der Flügel sind die Stege 261, 262, 263, 264 angeordnet, womit sie einen Schutz vor den Schneidkanten bilden. Die Schutzhülse 21 und der Zentrierkörper 2 sind durch den Abstand C voneinander beabstandet, so dass das rohrförmige Werkstück 8 auf den Zentrierkörper 2 aufgeschoben werden kann.

## Patentansprüche

1. Kalibrier- und Anfaswerkzeug für rohrförmige Werkstücke mit einem Zentrierkörper (2), mindestens einem hierzu versetzt angeordneten Flügel (3, 3'), auf dem eine Schneidkante (4, 4') ausgebildet ist und einem Flächenabschnitt (7) für eine radial abstehende Grundplatte,
**dadurch gekennzeichnet, dass**
der Flügel (3, 3') zumindest bereichsweise von dem Flächenabschnitt für die Grundplatte (22) in axialer Richtung beabstandet ist, so dass ein Freiraum (11, 11') für die Abfuhr anfallender Späne besteht.

2. Kalibrier- und Anfaswerkzeug nach Anspruch 1, **dadurch gekennzeichnet, dass** das Kalibrier- und Anfaswerkzeug als Fräskörper ausgebildet ist, der frontseitig den Zentrierkörper (2) aufweist und rückwärtig einen Antriebszapfen (5) besitzt, der mit einem manuellen oder motorischen Antrieb verbindbar ist.

3. Kalibrier- und Anfaswerkzeug nach einem der Ansprüche 1 oder 2, **dadurch gekennzeichnet, dass** die Grundplatte (22) einstückig mit dem Kalibrier- und Anfaswerkzeug verbunden ist.

4. Kalibrier- und Anfaswerkzeug nach einem der Ansprüche 1 bis 2, **dadurch gekennzeichnet, dass** die Grundplatte (22) ein Teil einer Schutzhülse (21) ist, die zudem einen zylinderförmigen Abschnitt besitzt, der im zusammengebauten Zustand koaxial zu dem Kalibrier- und Anfaswerkzeug gelagert ist und dieses zumindest teilweise umfasst.

5. Kalibrier- und Anfaswerkzeug nach Anspruch 4, **dadurch gekennzeichnet, dass** die Schutzhülse (21) zumindest um den Betrag der Mantelfläche des rohrförmigen Werkstücks von dem Zentrierkörper beabstandet ist.

6. Kalibrier- und Anfaswerkzeug nach einem der Ansprüche 4 oder 5, **dadurch gekennzeichnet, dass** die Schutzhülse (21) mindestens eine Ausnehmung (251, 252, 253) zur Abfuhr anfallender Späne besitzt.

7. Kalibrier und Anfaswerkzeug nach Anspruch 6, **dadurch gekennzeichnet, dass** die Ausnehmung an der Manteloberfläche des zylinderförmigen Abschnitts ausgebildet ist.

8. Kalibrier- und Anfaswerkzeug nach einem der Ansprüche 1 bis 6, **dadurch gekennzeichnet, dass** die Grundplatte (22) eine zentrale Bohrung besitzt, die so bemessen ist, dass die Schutzhülse über den Antriebszapfen (5) aufsteckbar ist, wo sie mittelbar oder unmittelbar über eine Gewindeverbindung (6) mit dem Kalibrier- und Anfaswerkzeug verbindbar ist.

9. Kalibrier- und Anfaswerkzeug nach einem der Ansprüche 1 bis 7,
**gekennzeichnet durch** mehrere Flügel (3, 3'), die vorzugsweise äquiangular angeordnet sind.

10. Kalibier- und Anfaswerkzeug nach Anspruch 8, **dadurch gekennzeichnet, dass** die Flügel (3, 3') äquiangular angeordnet sind.

11. Kalibrier- und Anfaswerkzeug nach Anspruch 8, **dadurch gekennzeichnet, dass** die Schneidkanten (4, 4') der Flügel (3, 3') unterschiedlich ausgebildet sind, wobei für die Ausformung einer Außenphase, einer Innenphase und einer ebenen Stirnseite jeweils mindestens eine Schneidkante vorhanden ist.

## Claims

1. Calibrating and chamfering tool for tubular workpieces, having a centring body (2), at least one wing (3, 3') which is arranged in an offset manner with respect thereto and on which a cutting edge (4, 4') is formed, and a surface section (7) for a radially protruding base plate,
**characterized in that**
the wing (3, 3') is at least regionally spaced apart in the axial direction from the surface section for the base plate (22), such that a clearance (11, 11') for the removal of accumulating chips is produced.

2. Calibrating and chamfering tool according to Claim 1, **characterized in that** the calibrating and chamfering tool is in the form of a milling body which has the centring body (2) on its front side and has a drive pin (5) on its rear side, said drive pin being connectable to a manual or motor drive.

3. Calibrating and chamfering tool according to either of Claims 1 and 2, **characterized in that** the base plate (22) is integrally connected to the calibrating and chamfering tool.

4. Calibrating and chamfering tool according to either of Claims 1 and 2, **characterized in that**the base plate (22) is a part of a protective sleeve (21) which additionally has a cylindrical section which is amounted, in the assembled state, coaxially with the calibrating and chamfering tool and at least partially encloses the latter.

5. Calibrating and chamfering tool according to Claim 4, **characterized in that** the protective sleeve (21) is spaced apart from the centring body at least by the amount of the lateral surface of the tubular workpiece.

6. Calibrating and chamfering tool according to either of Claims 4 and 5, **characterized in that** the protective sleeve (21) has at least one cutout (251, 252, 253) for the removal of accumulating chips.

7. Calibrating and chamfering tool according to Claim 6, **characterized in that** the cutout is formed on the lateral surface of the cylindrical section.

8. Calibrating and chamfering tool according to one of Claims 1 to 6, **characterized in that** the base plate (22) has a central bore which is dimensioned such that the protective sleeve is pluggable over the drive pin (5), where it is connectable indirectly or directly via a threaded connection (6) to the calibrating and chamfering tool.

9. Calibrating and chamfering tool according to one of Claims 1 to 7, **characterized by** a plurality of wings (3, 3') which are arranged preferably at equal angles.

10. Calibrating and chamfering tool according to Claim 8, **characterized in that** the wings (3, 3') are arranged at equal angles.

11. Calibrating and chamfering tool according to Claim 8, **characterized in that** the cutting edges (4, 4') of the wings (3, 3') are formed in different manners, wherein in each case one cutting edge is present for the formation of an outer chamfer, an inner chamfer and a planar end side.

## Revendications

1. Outil de calibrage et de chanfreinage pour des pièces tubulaires, comprenant un corps de centrage (2), au moins une aile (3, 3') qui est disposée de façon décalée par rapport à celui-ci et sur laquelle est réalisée une arête coupante (4, 4'), ainsi qu'une portion de surface (7) pour une plaque de base faisant saillie radialement, **caractérisé par le fait que** ladite aile (3, 3') est espacée, au moins par zones, dans la direction axiale par rapport à ladite portion de surface pour la plaque de base (22) de sorte qu'il existe un espace libre (11, 11') pour l'évacuation de copeaux produits.

2. Outil de calibrage et de chanfreinage selon la revendication 1, **caractérisé par le fait que** ledit outil de calibrage et de chanfreinage est réalisé en tant que corps de fraisage qui présente, sur la face frontale, ledit corps de centrage (2) et possède, sur la face arrière, un tenon d'entraînement (5) qui est apte à être relié à un mécanisme d'entraînement manuel ou par moteur.

3. Outil de calibrage et de chanfreinage selon l'une quelconque des revendications 1 ou 2, **caractérisé par le fait que** ladite plaque de base (22) est reliée en une seule pièce audit outil de calibrage et de chanfreinage.

4. Outil de calibrage et de chanfreinage selon l'une quelconque des revendications 1 à 2, **caractérisé par le fait que** ladite plaque de base (22) est une partie d'une douille de protection (21) qui présente en outre une portion cylindrique qui, en état monté, est logée coaxialement à l'outil de calibrage et de chanfreinage et entoure celui-ci au moins en partie.

5. Outil de calibrage et de chanfreinage selon la revendication 4, **caractérisé par le fait que** ladite douille de protection (21) est espacée par rapport au corps de centrage au moins de la valeur de la surface latérale de la pièce tubulaire.

6. Outil de calibrage et de chanfreinage selon l'une quelconque des revendications 4 ou 5, **caractérisé par le fait que** ladite douille de protection (21) comprend au moins un évidement (251, 252, 253) pour l'évacuation de copeaux produits.

7. Outil de calibrage et de chanfreinage selon la revendication 6, **caractérisé par le fait que** ledit évidement est réalisé sur la surface supérieure latérale de la portion cylindrique.

8. Outil de calibrage et de chanfreinage selon l'une quelconque des revendications 1 à 6, **caractérisé par le fait que** ladite plaque de base (22) présente un perçage central qui est dimensionné de telle sorte que la douille de protection peut être rapportée via ledit tenon d'entraînement (5) où elle peut être reliée directement ou indirectement par un raccordement fileté (6) audit outil de calibrage et de chanfreinage.

9. Outil de calibrage et de chanfreinage selon l'une quelconque des revendications 1 à 7, **caractérisé par** une pluralité d'ailes (3, 3') qui, de préférence, sont disposées de façon équiangulaire.

10. Outil de calibrage et de chanfreinage selon la revendication 8, **caractérisé par le fait que** lesdites ailes (3, 3') sont disposées de façon équiangulaire.

11. Outil de calibrage et de chanfreinage selon la revendication 8, **caractérisé par le fait que** les arêtes coupantes (4, 4') des ailes (3,3') sont réalisées de manière différente, dans lequel, pour la formation d'un chanfrein extérieur, d'un chanfrein intérieur et d'une face frontale plane, existe respectivement au moins une arête coupante.
